# EUROPEAN PATENT SPECIFICATION

(11) **EP 2 173 776 B1**
(45) Date of publication and mention of the grant of the patent: **15.02.2012**
(21) Application number: 08772179.1
(22) Date of filing: 27.06.2008
(51) Int. Cl.: C08F 2/00, C08K 5/05, C08K 5/06, C08L 23/00, C10M 145/26, F04B 53/18

(54) **HYPERCOMPRESSOR LUBRICANTS FOR HIGH PRESSURE POLYOLEFIN PRODUCTION**
HYPERKOMPRESSORSCHMIERMITTEL FÜR HOCHDRUCK-POLYOLEFINPRODUKTION
LUBRIFIANTS D'HYPERCOMPRESSEUR POUR UNE PRODUCTION DE POLY(OLÉFINE) HAUTE PRESSION

(30) Priority: 13.07.2007 US 949636 P
(43) Date of publication of application: 14.04.2010
(73) Proprietor: Dow Global Technologies LLC, Midland, MI 48674 (US)
(72) Inventor: EATON, Robert, F., Belle Mead, NJ 08502 (US)
(74) Representative: Hayes, Adrian Chetwynd
(86) International application number: PCT/US2008/068599
(87) International publication number: WO 2009/012041

(56) References cited:
- EP-A- 0 455 092
- WO-A-84/03837
- FR-A- 2 753 986

## Description

### FIELD OF THE INVENTION.

This invention relates to high pressure polyolefins. In one aspect, the invention relates to the manufacture of high pressure polyolefins while in another aspect, the invention relates to the lubricants used in the hypercompressors of the high pressure polyolefin manufacturing process. In yet another aspect, the invention relates to products made from high pressure polyolefins, particularly power cable sheaths such as the insulation layer or protective jacket of a power cable.

### BACKGROUND OF THE INVENTION

In the manufacture of high pressure polyolefins, e.g., high pressure low density polyethylene (HPLDPE), operating pressures of 70 to 350 megapascals (MPa, or about 10,000 to 50,000 psi) are typical with operating pressures of 240 to 310 MPa (about 35,000 to 45,000 psi) preferred. To achieve these high pressures, one or more hypercompressors are employed, and the operation of this equipment requires the use of lubricants. Unfortunately, given the high operating pressures and the nature of commercially available hypercompressor seals, lubricant inevitably leaks into the reactor, albeit at very low levels (e.g., parts per million) to mix with and become part of the reaction mass, e.g., ethylene, comonomer, solvent, catalyst, etc.

Traditionally, mineral oil has been used as a hypercompressor lubricant, and its leakage into the reaction mass has little, if any, adverse affect on either the formation of the high pressure polyolefin or the use of the polyolefin in a subsequent fabrication, e.g., molding or extrusion, process. However, the use of mineral oil as a hypercompressor lubricant is associated with substantial maintenance time for the hypercompressors.

Polyhydroxy-functional polyalkylene oxide co-polyols, such as UCON^{tm} PE-320 available from The Dow Chemical Company, is another group of hypercompressor lubricants. While these lubricants are generally better than mineral oil in the context of hypercompressor maintenance, their presence in the high pressure polyolefin product (as a result of leaking from the hypercompressor), particularly copolymer products of olefin and vinyl silane, can have an adverse affect on the use of the polyolefins product in processes in which the polyolefin is eventually crosslinked, even when the lubricant is present only in parts per million amounts. Due to the presence of both multiple hydroxyl groups and the hydrophilic ethylene oxide groups, these lubricants are quite hydrophilic, and this can result in increased water uptake by the polymer, especially a silane-modified polymer. This, in turn, can lead to scorch, i.e., pre-mature crosslinking, if the high pressure polymer is processed in an extruder or other piece of process equipment operated at conditions conducive to crosslinking. Moreover, in some applications, such as an insulation sheath for a medium or high voltage power cable, the presence of the polyhydroxy functional palyol can result in dielectric loss and early deterioration of the cable.

Accordingly, both the high pressure polyolefin manufacturing industry and the polymer fabrication industry, particularly the wire and cable industry, have a continuing interest in identifying and employing hypercompressor lubricants that will serve effectively in the hypercompressor and to the extent that the lubricant leaks into the reaction mass, its presence in the polyolefin will not promote premature crosslinking during extrusion or molding of the polyolefin, particularly of silane-modified high pressure polyolefins.

### SUMMARY OF THE INVENTION

In one embodiment, the invention is an improved process for manufacturing a high pressure polyolefin, the high pressure of the process created at least in part through the use of a hypercompressor, the improvement comprising using as a lubricant for the hypercompressor a polyether polyol comprising no more than one hydroxyl functionality, i.e., comprising either one or none hydroxyl functionality.

In another embodiment, the invention is a hypercompressor containing as a lubricant a Polyether polyol comprising no more than one hydroxyl functionality.

In yet another embodiment, the invention is a composition comprising a (i) high pressure polyolefin, and (ii) polyether polyol comprising no more than one hydroxyl functionality.

In still another embodiment, the invention is an extruded or molded article comprising a crosslinked high pressure polyolefin and a polyether polyol comprising no more than one hydroxyl functionality. Power cables that comprise a sheath layer, e.g., an insulation layer, produced from a mixture of a high pressure polyolefin and a polyether polyol comprising no more than one hydroxyl functionality are exemplary of this embodiment. The sheath layer is crosslinked as it is produced or subsequent to its production. In one variant of this embodiment, the high pressure polyolefin comprises a high pressure silane-modified polyolefin, e.g., an ethylene/vinyl silane copolymer or a silane-grafted high pressure polyolefin.

The use of a Polyether polyol hypercompressor lubricant comprising no more than one hydroxyl functionality during the manufacture of the high pressure polyolefin reduces or eliminates the possibility of scorch during the fabrication, e.g., shaping or molding, of the polyolefin into a crosslinked product. In addition, if the high pressure polyolefin is a silane-modified nigh pressure polyolefin, then the use of a polyether polyol hypercompressor lubricant comprising no more than one hydroxyl functionality during the manufacture of the high pressure polyolefin reduces or eliminates dielectric loss in medium and high voltage cable sheaths prepared from the silane-modified high pressure polyolefin.

### BRIEF DESCRIPTION OF THE DRAWINGS

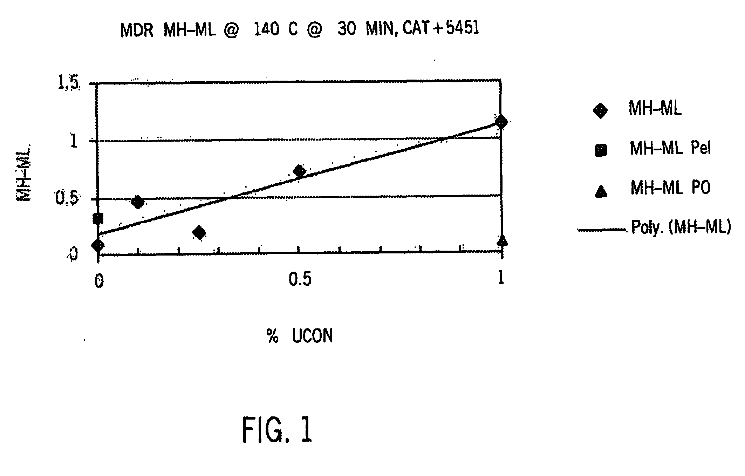

The Figure is a graph reporting the crosslinking properties of DFDA 5451 NT, a polyethylene moisture-curable vinyltrimethoxysilane (VTMS) copolymer and 5% of DGDA-1140 catalyst masterbatch available from The Dow Chemical Company, at various percentages of UCON^{tm} PE-320 hypercompressor lubricant.

### DESCRIPTION OF THE PREFERRED EMBODIMENT

### Definitions:

"Cable," "power cable" and like terms means at least one wire or optical fiber within a protective jacket or sheath. Typically, a cable is two or more wires or optical fibers bound together, typically in a common protective jacket or sheath. The individual wires or fibers inside the jacket may be bare, covered or insulafed. Combination cables may contain *both* electrical wires and optical fibers. The cable, etc. can be designed for low, medium and high voltage applications. Typical cable designs are illustrated in USP 5.246,783, 6,496,629 and 6,714,707.

"Polymer" means a polymeric compound prepared by polymerising monomers, whether of the same or a different type. The generic term polymer thus embraces the term homopolymer, usually employed to refer to polymers prepared from only one type of monomer, and the term interpolymer or copolymer as defined below.

"Interpolymer" and "copolymer" mean a polymer prepared by the polymerization of at least two different types of monomers. These generic terms include both classical copolymers, i.e., polymers prepared from two different types of monomers, and polymers prepared from more than two different types of monomers, e.g., terpolymers, tetrapolymers, etc.

"Polyolefin" and like terms means a polymer derived from one or more simple olefin monomers, e.g., ethylene, propylene, 1-butene, 1-hexene, 1-octene and the like. The olefin monomers can be substituted or unsubstituted and if substituted, the substituents can vary widely. For purposes of this invention, substituted olefin monomers include VTMS, vinyl acetate, C₂₋₆ alkyl acrylates, conjugated and nonconjugated dienes, polyenes, vinylsiloxanes, carbon monoxide and acetylenic compounds. If the polyolefin is to contain unsaturation, then preferably at least one of the comonomers is at least one nonconjugated diene such as 1,7-octadiene, 1,9-decadiene, 1,11-dodecadiene, 1,13-tetradecadiene, 7-methyl-1,6-octadiene, 9-methyl-1,8-decadiene and the like, or a siloxane of the formula CH₂=CH-[Si(CH₃)₂-O]ₙ-Si(CH₃)₃-CH=CH₂ in which n is at least one. Many polyolefins are thermoplastic and for purposes of this invention, can include a rubber phase. Polyolefins include but are not limited to polyethylene, polypropylene, polybutene, polyisoprene and their various interpolymers.

"High pressure polyolefin" and like terms means a polyolefin that has been produced under high pressure conditions, e.g., at a pressure of at least 70 MPa (10,000 psi). Representative high pressure polyolefins are those made by the high pressure processes described in USP 6,407,191 and 6,569,962.

"Silane-modified polyolefin" and like terms means a polyolefin comprising silane functionality. The presence of the silane functionality as part of the polyolefin can either be the result of incorporating a silane substituted olefin monomer (e.g., VTMS) into the polymer backbone, or by grafting the silane functionality to the polymer backbone.

"Silane-grafted polyolefin" and like terms means a silane-containing polyolefin prepared by a process of grafting a silane functionality onto the polymer backbone of the polyolefin as described, for example, in USP 3,646,155 or 6,048,935.

"Vinylsilane-olefin copolymer" and like terms means a copolymer prepared by copolymerizing an olefin, including but not limited to methylene, with an ethylenically unsaturated silane compound, i.e., a vinylsilane monomer containing one or more hydrolysable groups such as VTMS, as described, for example, in USP 4,413,066.

"hydrophobic polyether polyol" and like terms means that the polyether polyol will absorb 10 wt% or less water at equilibrium at 100% humidity and under ambient conditions. By way of example, UCON PE-305 is hydrophobic (a propylene-based Polyether polyol) while UCON PE-320 is hydrophilic (an ethylene-based polyether polyol).

The phrase "characterized by the formula" is not intended to be limiting and is used in the same way that "compiling" commonly is used. the term "independently selected" is used to indicate that the R groups, e.g., R and R¹ can be identical or different (e.g. R and R¹ may be hydrocarbyl or R may be a hydrocarbyl and R¹ may be an inertly-substituted hydrocarbyl radical). Use of the singular includes use of the plural and vice versa. Named R groups will generally have the structure that is recognized in the art as corresponding to R groups having that name. These definitions are intended to supplement and illustrate, not preclude, the definitions known to those of skill in the art.

"Hydrocarbyl" means a univalent hydrocarbyl radical, typically containing 1 to 30 carbon atoms, preferably 1 to 24 carbon atoms, most preferably 1 to 12 carbon atoms, including branched or unbranched, saturated or unsaturated species, such as alkyl groups, alkenyl groups, aryl groups, and the like.

"Inertly-substituted hydrocarbyl" and like terms means hydrocarbyl substituted with one or more substituent atoms or groups, which do not undesirably interfere with the desired reaction(s) or desired properties of the resulting coupled polymers (*e.g*., aromatics).

"End-capping radical", "end-capping group" and like terms means a radical or group that is not reactive with other reagents or products present during the cure or cross-linking process of HPLDPE or other polyolefin of this invention, and includes but is not limited to an alkyl radical (e.g., C₁₋₂₀, preferably a C₁₋₈, alkyl), an ester radical and a urethane radical.

"alkyl" means a straight-chain, branched or unbranched, saturated hydrocarbon radical. Suitable alkyl radicals include, for example, methyl, ethyl, n-propyl, i-propyl, n-butyl, t-butyl, i-butyl (or 2-methylpropyl), hexyl, octyl, etc. In particular embodiments of this invention, alkyls have between 1 and 200, usually between 1 and 50, more typically between 1 and 20, and even more typically between 1 and 12, carbon atoms.

"Aryl" means an aromatic substituent which may be a single aromatic ring or multiple aromatic rings which arc fused together, linked covalently, or linked to a common group such as a methylene or ethylene moiety. The aromatic ring(s) may include phenyl, naphthyl, anthracenyl, and biphenyl, among others. In particular embodiments, aryls have between 1 and 200 carbon atoms, between 1 and 50 carbon atoms or between 1 and 20 carbon atoms.

"High Pressure Low Density Polyethylene", "HPLDPE" and like terms mean an ethylene homo- or copolymer containing long chain branching (LCB), the polymer prepared by free-radical polymerization under a pressure of at least 70 MPa (10,000 psi). If a copolymer, the comonomer can be any molecule with an ethylenic group available for polymerization with the ethylene monomer, but it is typically at least one C₃₋₂₀, more typically at least one C₃₋₁₂, alpha-olefin (α-olefin). Preferred α-olefins include propylene, 1-butene, 1-hexene and 1-octene.

"Long chain branching", "LCB" and like terms mean, in the context of an HPLDPE polymer for example, a branch chain extending from the polymer backbone, the branch chain comprising more than one carbon atom. If the HPLDPE is a copolymer, then the LCB comprises one carbon more than two carbons less than the total length of the longest comonomer copolymerized with ethylene. For example, in an ethylene/1-octene HPLDPE polymer, the LCB is at least seven carbons atoms in length. As a practical matter, the LCB is longer than the side chain resulting from the incorporation of the comonomer into the polymer backbone. The polymer backbone of an HPLDPE comprises coupled ethylene units.

"Blend," "polymer blend" and like terms mean a blend of two or more polymers. Such a blend may or may not be miscible. Such a blend may or may not be phase separated. Such a blend may or may not contain one or more domain configurations, as determined from transmission electron spectroscope, light scattering, x-ray spattering, and any other method known in the art.

"Composition" and like terms means a mixture or blend of two or more components. In the context of a mix or blend of materials from which a cable sheath or other article of manufacture is fabricated, the composition includes all the components of the mix, e.g., silane-modified polyolefin, lubricant, filler and any other additives such as cure catalysts, anti-oxidants, flame retardants, etc.

"Catalytic amount" means an amount necessary to promote the reaction of two components at a detectable level, preferably at a commercially acceptable level.

"Weight average molecular weight" (Mw) and "number average molecular weight" (Mn) are well known in the polymer art and can be determined by, for example, gel permeation chromatography as described in WHO 2004/031250 A1.

### Lubricants:

In one embodiment, the invention relates to a lubricant for compressors. The lubricant is a hydrophobic polyether polyol with single hydroxyl functionality or without any hydroxyl functionality. The Polyether mono- or non-hydroxyl functional lubricant has higher carbon content than its poly-hydroxyl-functional polyethylene oxide containing equivalent, and is characterized by the formula:

R-[O-C(R₁)₂]ₙ-O-R₂

in which R is hydrogen or a C₁₋₂₀ hydrocarbyl or inertly-substituted hydrocarbyl radical, R₁ is independently a hydrogen or a C₁₋₂₀ hydrocarbyl or inertly-substituted hydrocarbyl radical, R₂ is an end-capping radical, and n is an integer of 2-1000. In one embodiment, the end capping radical is an alkyl or an inertly substituted alkyl radical.

Polyether polyols can be manufactured by the catalyzed addition of epoxies (cyclic ethers) to an initiator. Cyclic ethers include but are not limited to propylene oxide (PO), ethylene oxide (EO), butylene oxide, styrene oxide, cyclobexene oxide, and various mixtures of two or more of these oxides. These oxides react with active hydrogen-containing compounds, which are referred to as initiators, including but not limited two water, glycols, polyols and amines; thus, a wide variety of compositions of varying structures, chain lengths, and molecular weights are possible. By selecting the proper oxide or oxides, initiator, and reaction conditions and catalysts, it is possible to synthesize a series of polyether polyols that range from low-molecular-weight polyglycols to high-molecular-weight resins.

Polyether polyols can be prepared industrially by polyaddition of alkylene oxide to polyfunctional starter compounds including but not limited to alcohols, acids, or amines with base catalysis including but not limited to potassium hydroxide (KOH) (see, for example, Gum, Riese & Ulrich (ed.): "Reaction Polymers", Hanser Verlag, Munich, 1992, pp. 75-96). Following completion of the polyaddition, the basic catalyst is removed from the polyether polyol using any suitable method including but not limited to neutralization, distillation and filtration. Moreover, as chain length increases, polyether polyols prepared by base catalysis leads to an increase in the number of mono-functional polyethers terminating in double bonds.

Mono-hydroxyl polyether polyols can be formed by addition of multiple equivalents of epoxide to low molecular weight mono-hydroxyl starters including but not limited to methanol, ethanol, phenols, allyl alcohol, longer chain alcohols, and various mixtures of two or more of these alcohols. Suitable epoxides include those described above. The epoxides can be polymerized using well-known techniques and a variety of catalysts, including but not limited to alkali metals, alkali metal hydroxide and alkoxides, double metal cyanide complexes. Suitable mono-hydroxyl starters can also be made, for example, by first producing a diol or triol and then converting all but one of the remaining hydroxyl groups to an ether, ester or other non-reactive group.

Useful mono-hydroxyl polyethers in this invention range in Mw from 100 to 3000, preferably from 200 to 2200. Other alkylene oxides, or blends of alkylene oxides, are useful and include but are not limited to mono hydroxyl functional butanol initiated propylene oxide of 2000 Mw. Polyether polyol hyper-compressor lubricants without hydroxyl functionality include acid, isocyanate and carbon-capped versions of the above. Alkylene oxides and blends of alkylene oxides can be prepared using methods well-known in the art.

### High Pressure Low Density Polyethylene (HPLDPE):

Preferred polyolefins are HPLDPE, which are produced in reactors at higher pressures; the lubricants discussed above are useful for the production of HPLDPE. The molecular structure of high pressure low density polyethylene is highly complex. The permutations in the arrangement of its simple building blocks are essentially infinity. High pressure resins are characterized by an intricate long chain branched molecular architecture. These long chain branches have a dramatic effect on the melt rheology of the resins. High pressure low density polyethylene resins also possess a spectrum of short chain branches generally 1 to 8 carbon atoms in length that control resin crystallinity (density). The frequency distribution of these short chain branches is such that, on the average, most chains possess the same average number of branches. The short chain branching distribution characterizing high pressure low density polyethylene can be considered narrow.

The Mw of the HPLDPE polymers is typically at least 30,000, more typically at least 40,000 and even more typically at least 50,000. The maximum Mw of the HPLDPE polymers of this invention typically does not exceed 750,000, more typically it does not exceed 500,000 and even more typically it does not exceed 400,000. The molecular weight distribution or polydispersity or Mw/Mn of these polymers is typically between 3 and 7, more typically between 3 and 6 and preferably between 2.5 and 5.

The melt index (MI) of the HPLDPE polymers of this invention is typically at least 0.03, more typically at least 0.05 and even more typically at least 0.1. The maximum MI of the HPLDPE polymers of this invention typically does not exceed 50, more typically it does not exceed 30 and even more typically it does not exceed 20. The MI is measured by ASTM D1238 (Condition E) (190C/2.16 kg).

The density of these polymers is typically between 0.900 and 0.950, more typically between 0.905 and 0.945 and preferably between 0.910 and 0.940. Density is determined in accordance with American Society for Testing and Materials (ASTM) procedure ASTM D792-00. Method B.

The high pressure polymerization process used in the practice of this invention is well known in the art. See for example USP 6,407,191 and 6,569,962. Most commercial high density polyethylenes are polymerized in heavy walled autoclaves or tubular reactors at pressures up to 40,000 pounds per square inch (psi) or more. The temperature is typically between 70 and 320, preferably between 100 and 320 and more preferably between 120 and 320, °C. If the HPLDPE is a copolymer, then the amount of comonomer used is typically between 0.5 and 35, preferably between 2 and 30 and more preferably between 5 and 25, weight percent based upon the combined weight of the ethylene and comonomer. Telomers and other process additives are used as desired in known amounts and known ways.

### Polyolefins for Medium and High Voltage Insulation:

In a variant of this invention, polyether polyols with mono-hydroxyl functionality, or without any hydroxyl functionality, are useful in the production of polyolefins for medium (3 to 60 kV) and high voltage (>60 kV) insulation. The polyolefin polymer can comprise at least one resin or its blends having melt index (MI, I₂) from 0.1. to 50 grams per 10 minutes (g/10min) and a density between 0.85 and 0.95 grams per cubic centimeter (g/cc). Typical polyolefins include high density polyethylene, ethylene vinyl acetate, and ethylene ethyl acrylate. Density is measured by the procedure of ASTM D-792 and melt index is measured by ASTM D-1238 (190 °C /2.16kg).

In another embodiment, the polyolefin polymer includes but is not limited to copolymers of ethylene and unsaturated esters with an ester content of at least 5 wt% based on the weight of the copolymer. The ester content is often as high as 80 wt%, and, at these levels, the primary monomer is the ester.

In still another embodiment, the range of ester content is 10 to 40 wt%. The percent by weight is based on the total weight of the copolymer. Examples of the unsaturated esters are vinyl esters and acrylic and methacrylic acid esters. The ethylene/unsaturated ester copolymers usually are made by conventional high pressure processes. The copolymers can have a density in the range of 0.900 to 0.990 g/cc. In yet another embodiment, the copolymers have a density in the range of 0.920 to 0.950 g/cc. The copolymers can also have a melt index in the range of 1 to 100 g/10 min. In still another embodiment, the copolymers can have a melt index in the range of 5 to 50 g/10 min.

The ester can have 4 to 20 carbon atoms, preferably 4 to 7 carbon atoms. Examples of vinyl esters are: vinyl acetate; vinyl butyrate; vinyl pivalate; vinyl neononanoate; vinyl neodecanoate; and vinyl 2-ethylhexanoate. Examples of acrylic and methacrylic acid esters are: methyl acrylate; ethyl acrylate; t-butyl acrylate; n-butyl acrylate; isopropyl acrylate; hexyl acrylate; decyl acrylate; lauryl acrylate; 2-ethylhexyl acrylate; lauryl methacrylate; myristyl methacrylate; palmityl methacrylate; stearyl methacrylate; 3-methacryloxypropyltrimethoxysilane; 3-methacryloxypropyltriethoxysilane; cyclohexyl methacrylate: n-hexylmethacrylate; isodecyl methacrylate; 2-methoxyethyl methacrylate: tetrahydrofurfuryl methacrylate; octyl methacrylate; 2-phenoxyethyl methacrylate; isobornyl methacrylate; isooctyl methacrylate; and oleyl methacrylate. Methyl actylate, ethyl acrylate, and n- or t-butyl acrylate are preferred. In the case of alkyl acrylates and methacrylates, the alkyl group can have 1 to 8 carbon atoms, and preferably has 1 to'4 carbon atoms. The alkyl group can be substituted with an oxyalkyltrialkoxysilane.

Other examples of polyolefin polymers are: polypropylene; polypropylene copolymers; polybutene: polybutene copolymers; highly short chain branched α-olefin copolymers with ethylene co-monomer less than 50 mole percent but greater than 0 mole percent; polyisoprene; polybutadiene; EPR (ethylene copolymerised with propylene); EPDM (ethylene copolymerised with propylene and a diene such as hexadiene, dicyclopentadiene, or ethylidene norbomene); copolymers of ethylene and an α-olefin having 3 to 20 carbon atoms such as ethylene/octene copolymers; terpolymers of ethylene, α-olefin, and a diene (Preferably non-conjugated); terpolymers of ethylene, α-olefin, and an unsaturated ester; copolymers of ethylene and vinyl-tri-alkyloxy silane; terpolymers of methylene, vinyl-tri-alkyloxy silane and an unsaturated ester; or copolymers of ethylene and one or more of acrylonitrile or maleic acid esters.

The polyolefin polymer of the present invention also includes ethylene ethyl acrylate, ethylene vinyl acetate, vinyl ether, vinyl acetate, butyl acrylate, ethylene vinyl ether, and methyl vinyl ether. One example of commercially available ethylene vinyl acetate is AMPLIFY 101 from The Dow Chemical Company.

The polyolefin polymer of the present invention includes but is not limited to a polypropylene copolymer comprising at least 50 mole percent units derived from propylene and the remainder from units from at least one α-olefin having up to 20, preferably up to 12 and more preferably up to 8, carbon atoms, and a polyethylene copolymer comprising at least 50 mole percent units derived from ethylene and the remainder from units derived from at least one α-olefin having up to 20, preferably up to 12 and more preferably up to 8, carbon atoms.

The polyolefin copolymers useful in the practice of this invention include ethylene/α-olefin interpolymers having a α-olefin content of between 15, preferably at least. 20 and even more preferably at least 25, weight percent (wt%) based on the weight of the interpolymer. These interpolymers typically have an α-olefin content of less than 50, preferably less than 45, more preferably less than 40 and even more preferably less than 35, wt% based on the weight of the interpolymer. The α-olefin content is measured by ¹³C nuclear magnetic resonance (NMR) spectroscopy using the procedure described in Randall (Rev. Macromol. Chem. Phys., C29 (2&3*)).* Generally, the greater the α-olefin content of the interpolymer, the lower the density and the more amorphous the interpolymer, and this translates into desirable physical and chemical properties for the protective insulation layer.

The α-olefin is preferably a C₃₋₂₀ linear, branched or cyclic α-olefin. Examples of C₃₋₂₀ α-olefins include propene, 1-butene, 4-methyl-1-pentene, 1-hexene, 1-octene, 1-decene, 1-dodecene, 1-tetradecene, 1-hexadecene, and i-octadecene. The α-olefins also can contain a cyclic structure such as cyclohexane or cyclopentane, resulting in an α-olefin such as 3-cyclohexyl-1-propene (allyl cyclohexane) and vinyl cyclohexane. Although not α-olefins in the classical sense of the term, for purposes of this invention certain cyclic olefins, such as norbornene and related olefins, particularly 5-éthylidene-2-norbornene, are α-olefins and can be used in place of some or all of the α-olefins described above. Similarly, styrene and its related olefins (for example, α- methylstyrene, etc.) are α-olefins for purposes of this invention. Illustrative polyolefin copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethylene/butene/1-octene, ethylene/propylene/diene monomer (EPDM) and ethylene/butene/styrene. The copolymers can be random or block.

The polyolefins used in the practice of this invention can be used alone or in combination with one or more other polyolefins, e.g., a blend of two or more polyolefin polymers that differ from one another by monomer composition and content, catalytic method of preparation, etc. If the polyolefin is a blend of two or more polyolefins, then the polyolefin can be blended by any in-reactor or post-reactor process. The in-reactor blending processes are preferred to the post-reactor blending processes, and the processes using multiple reactors connected in series are the preferred in-reactor blending processes. These reactors can be charged with the same catalyst but operated at different conditions, *e.g*., different reactant concentrations, temperatures, pressures, *etc,* or operated at the same conditions but charged with different catalysts.

### Silane-Crosslinker:

Any silane that will either copolymerized or graft to and effectively crosslink the polyolefin polymers can be used in the practice of this invention. Suitable silanes include unsaturated silanes that comprise an ethylenically unsaturated hydrocarbyl group, such as a vinyl, allyl, isopropenyl, butenyl, cyclohexenyl or gamma-(meth)acryloxy allyl group, and a hydrolyzable group, such as, for example, a hydrocarbyloxy, hydrocarbonyloxy, or hydrocarbylamino group. Examples of hydrolyzable groups include methoxy, ethoxy, formyloxy, acetoxy, proprionyloxy, and alkyl or arylamino groups. Preferred silanes are the unsaturated alkoxy silanes which can be grafted onto the polymer. These silanes and their method of preparation are more fully described in USP 5,266,627. Vinyl trimethoxy silane, vinyl triethoxy silane, gamma-(meth)acryloxy propyl trimethoxy silane and mixtures of these silanes are the preferred silane crosslinkers for it use in this invention. If filler is present, then preferably the crosslinker includes vinyl triethoxy silane.

The amount of silane crosslinker used in the practice of this invention can vary widely depending upon the nature of the polymer, the silane, the processing conditions, the grafting efficiency, the ultimate application, and similar factors, but typically at least 0.5, preferably at least 0.7, parts per hundred resin (phr) is used. Considerations of convenience and economy are usually the two principal limitations on the maximum amount of silane crosslinker used in the practice of this invention, and typically the maximum amount of silane crosslinker does not exceed 5, preferably it does not exceed 2, phr. As used in parts per hundred resin or phr, "resin" means the polyolefin polymer.

The silane crosslinker can be grafted onto the polymer or copolymerized into the polymer by any conventional method, typically in the presence of a free radical initiator, e.g. peroxides and azo compounds, or by ionizing radiation, etc. Organic initiators are preferred, such as any one of the peroxide initiators, for example, dicumyl peroxide, di-tert-butyl peroxide, t-butyl perbenzoate, benzoyl peroxide, cumene hydroperoxide, t-butyl peroctoate, methyl ethyl ketone peroxide, 2,5-dimethyl-2,5-di(t-butyl peroxy)hexane, lauryl peroxide, and tert-butyl peracetate. A suitable azo compound is azobisisobutyl nitrite. The amount of initiator can vary, but it is typically present in an amount of at least 0.04, preferably at least 0.06, phr. Typically, the initiator does not exceed 0.15, preferably it does not exceed 0.10, phr. The ratio of silane crosslinker to initiator also can vary widely, but the typical crosslinker:initiator ratio is between 10:1 to 30:1, preferably between 18:1 and 24:1.

While any conventional method can be used to graft the silane crosslinker to the polyolefin polymer, one preferred method is blending the two with the initiator in the first stage of a reactor extruder, such as a Buss kneader. The grafting conditions can vary, but the melt temperatures are typically between 160 and 260 °C, preferably between 190 and 230 °C, depending upon the residence time and the half life of the initiator. The silane can be copolymerized with the polyolefins (as described above) in high pressure systems.

### Catalyst:

The composition of this invention comprising a silane-modified polyolefins and a polyether polyol with single hydroxyl functionality or without any hydroxyl functionality can also comprise a catalyst to promote the crosslinking of the polyolefin, preferably a catalytic amount of a Lewis acid or a Brønsted-Lowry acid. A Lewis acid is any species that can accept a pair of electrons and form a coordinate covalent bond. A Lewis acid can be any electrophile (including H⁺). Brønsted-Lowry acid is defined as any species that has the tendency to lose or donate a H⁺. All Brønsted-Lowry acids are Lewis acids. Preferably, the catalysts can be a tin catalyst, which includes but is not limited catalysts of the type that contain a Sn--O--X bond where X is hydrogen, Cl, Br, SnR₃ and (O)R wherein R is an alkyl group. Tin catalysts include but are not limited to dibutyltin dilaurate and stannous octoate. The catalyst comprises at least 0.001, preferably at least 0.01, and more preferably at least 0.02% by weight of the composition. The only limit on the maximum amount of catalyst in the composition is that imposed by economic and practicality (*e.g*., diminishing returns), but typically a general maximum comprises less than 5, preferably less than 2.5 and more preferably less than 1% by weight of the composition

### Polymer Composition:

The polymer composition from which a cable sheath or other article of manufacture is fabricated comprises a silane-madifed polyolefin, a polyether polyol with single hydroxyl functionality, or without any hydroxyl functionality, and a catalyst. The polyether polyol with single hydroxyl functionality or without any hydroxyl functionality hyper-compressor lubricant comprises typically less than 300, preferably less than 100, parts per million (ppm) of the composition.

Preparation of a cable sheath, including but not limited to an insulation jacket, with a polymer composition as described above will reduce premature cross-linking in silane-modified polyolefin and other alcohol reactive high pressure polyolefins relative to a polymer composition comprising a polyether polyol with polyhydroxyl functionality. In addition, the polarity of the lubricant will be reduced by using a polyether polyol with single hydroxyl functionality or without any hydroxyl functionality relative to using a polyether polyol with polyhydroxyl functionality.

Cure is typically promoted with a crosslinking catalyst, and any catalyst that will provide this function can be used in this invention. These catalysts generally include organic bases, carboxylic acids, and organo-metallic compounds including organic titanates and complexes or carboxylates of lead, cobalt, iron, nickel, zinc and tin. Dibutyltindilaurate, dioctyltinmaleate, dibutyltindiacetate, dibutyltindioctoate, stannous acetate, stannous octoate, lead naphthenate, zinc caprylate, cobalt naphthenate; and the like. Tin carboxylate, especially dibutyltindilaurate and dioctyltinmaleate, are particularly effective. The catalyst (or mixture of catalysts) is present in the composition in a catalytic amount, typically in an amount between 0.015 and 2 phr.

The polymer composition from which the cable sheathing or other article of manufacture is made can be filled or unfilled. If filled, then the amount of filler present should not exceed an amount that would cause degradation of the electrical and/or mechanical properties of the silane-modified polyolefin. Typically, the mount of filler present is between 0 and 60, preferably between 0 and 30, weight percent (wt%) based on the weight of the polymer. Representative fillers include clay, magnesium hydroxide, silica, calcium carbonate. In a preferred embodiment of this invention in which a filler is present, the filler is coated with a material that will prevent or retard any tendency that the filler might otherwise have to interfere with the silane cure reaction. Stearic acid is illustrative of such a filler coating.

Other additives can be used in the preparation of and be present in the polymer composition of this invention, and these include but are not limited to antioxidants, processing aids, pigments and lubricants.

Compounding of the polyolefin, lubricant-containing polymer can be effected by standard means known to those skilled in the art. "Examples of compounding equipment are internal batch mixers, such as a Banbury™ or Bolling™ internal mixer. Alternatively, continuous single or twin screw mixers can be used, such as a Farrel™ continuous mixer, a Werner and Pfleiderer™ twin screw mixer, or a Buss™ kneading continuous extruder. The type of mixer utilized, and the operating conditions of the mixer, will affect properties of the composition such as viscosity, volume resistivity, and extruded surface smoothness.

### Articles of Manufacture:

The polymer composition of this invention can be applied to a cable as a sheath in known amounts and by known methods (for example, with the equipment and methods described in USP 5,246,783 and 4,144,202). Typically, the polymer composition is prepared in a reactor-extruder equipped with a cable-coating die and after the components of the composition are formulated, the composition is extruded over the cable as The cable is drawn through the die. In a preferred embodiment of this invention in which the polyolefin polymer is a substantially linear ethylene polymer with a melt index (I₂ of 1 to 7 g/10 min), the insulation sheath coated onto the cable will cure in 1 to 10 days at ambient temperature.

Other articles of manufacture that can be prepared from the polymer compositions of this invention, particularly under high pressure and/or elevated moisture conditions, include fiber, ribbons, sheets, tapes, tubes, pipes, weather-stripping, seals, gaskets, foams, footwear and bellow. These articles can be manufactured using known equipment and techniques.

The hollowing examples further illustrate the invention. Unless otherwise stated, all parts and percentages are by weight.

### SPECIFIC EMBODIMENTS

### Example 1:

The premature cross-linking, or scorching, properties of the silane-polyethylene copolymer made with UCON^{tm} PE-320 and the silane-polyethylene copolymer made with PE-305, which is a mono-hydroxyl lubricant, was investigated. UCON^{tm} PE-320 is a synthetic lubricant made from polyalkylene glycol-base stock polymer. UCON^{tm} PE-320 is both di-functional in hydroxyl groups and hydrophilic. PE-305 is a hydrophobic mono-hydroxyl lubricant produced using propylene oxide, and is available from The Dow Chemical Company.

Increasing levels of UCON^{tm} PE-320 were added to DFDA-5451 NT (ethylene trimethoxy silane copolymer). Catalyst masterbatch DGDA-1140 available from The Dow Chemical Company was also added although any Lewis acid or Bronsted acid could be used as the catalyst. DFDA-5451 NT is a reactor produced copolymer of ethylene and vinyltrimethoxysilane, and is available from The Dow Chemical Company. As shown in the Figure, as more UCON^{tm} PE-320 was added, more cross-linking was observed as noted by the increase in torque (MH-ML). The highest observed torque was at 1% UCON^{tm} PE-320, Conversely, at the highest concentration (1%) of mono-functional lubricant PE-305, the torque was the same as at baseline, *i.e*., without UCON^{tm} PE-320. The ethylene trimethoxy silane copolymer (DFDA-S451 NT), which was made with mono-functional lubricant, exhibited dramatically reduced scorch (premature cross-linking) as compared with DFDA 5451 NT made from UCON^{tm} PE-320. Other lab studies showed that UCON^{tm} PE-320 can scorch DFDA-5451 NT, while mono-hydroxyl functional PO based lubricants did not scorch DFDA-5451 NT (data not shown).

## Claims

1. An improved high pressure process for manufacturing a high pressure polyolefin, the high pressure of the process created at least in part through the use of a hypercompressor, the improvement comprising using as a lubricant for the hypercompressor a polyether polyol comprising no more than one hydroxyl functionality.

2. The process of Claim 1 in which the lubricant comprises a polyether polyol with no more than one hydroxyl functionality and of the formula:
R- [O-C (R₁)₂]ₙ-O-R₂
in which R is hydrogen or a C₁₋₂₀ hydrocarbyl or inertly-substituted hydrocarbyl radical, R₁ is independently a hydrogen or a C₁₋₂₀ hydrocarbyl or inertly-substituted hydrocarbyl radical, R₂ is an end-capping group, and n is an integer of 2-1000.

3. The process of Claim 2 in which the end-capping group is an alkyl or an inertly substituted alkyl radical.

4. The process of Claim 3 in which R is a C₁₋₂₀ hydrocarbyle or inertly-substituted hydrocarbyl radical.

5. The process of Claim 3 in which R is hydrogen.

6. A hypercompressor containing as a lubricant a polyether polyol comprising no more than one hydroxyl functionality.

7. The hypercompressor of Claim 6 in which the Lubricant comprises a polyether polyol with no more than one hydroxyl functionality and of the formula:
R-[O-C(R₁)₂]ₙ-O-R₂
in which R is hydrogen or a C₁₋₂₀ hydrocarbyl or inertly-substituted hydrocarbyl radical, R₁ is independently a hydrogen or a C₁₋₂₀ hydrocarbyl or inertly-substituted hydrocarbyl radical, R₂ is an end-capping group, and n is an integer of 2-1000.

## Patentansprüche

1. Verbessertes Hochdruckverfahren zur Herstellung eines Hochdruck-Polyolefins, wobei der hohe Druck des Verfahrens wenigstens teilweise durch die Verwendung eines Hyperkompressors geschaffen wird, wobei die Verbesserung darin besteht, dass als Schmiermittel für den Hyperkompressor ein Polyetherpolyol mit nicht mehr als einer Hydroxylfunktionalität verwendet wird.

2. Verfahren nach Anspruch 1, bei dem das Schmiermittel ein Polyetherpolyol mit nicht mehr als einer Hydroxylfunktionalität umfasst, das die folgende Formel hat:
R-[O-C(R₁)₂]ₙ-O-R₂
bei der R Wasserstoff oder ein C₁₋₂₀-Hydrocarbyl oder inert substituiertes Hydrocarbylradikal ist, R₁ unabhängig voneinander ein Wasserstoff oder ein C₁₋₂₀-Hydrocarbyl oder inert substituiertes Hydrocarbylradikal ist, R₂ eine Endverkappungsgruppe ist und n eine ganze Zahl von 2-1000 ist.

3. Verfahren nach Anspruch 2, bei dem die Endverkappungsgruppe ein Alkyl oder ein inert substituiertes Alkylradikal ist.

4. Verfahren nach Anspruch 3, bei dem R ein C₁₋₂₀-Hydrocarbyl oder inert substituiertes Hydrocarbylradikal ist.

5. Verfahren nach Anspruch 3, bei dem R Wasserstoff ist.

6. Hyperkompressor, der als Schmiermittel ein Polyetherpolyol mit nicht mehr als einer Hydroxylfunktionalität enthält.

7. Hyperkompressor nach Anspruch 6, bei dem das Schmiermittel ein Polyetherpolyol mit nicht mehr als einer Hydroxylfunktionaltität umfasst, das die folgende Formel hat:
R-[O-C(R₁)₂]ₙ-O-R₂
bei der R Wasserstoff oder ein C₁₋₂₀-Hydrocarbyl oder inert substituiertes Hydrocarbylradikal ist, R₁ unabhängig voneinander ein Wasserstoff oder ein C₁₋₂₀-Hydrocarbyl oder inert substituiertes Hydrocarbylradikal ist, R₂ eine Endverkappungsgruppe ist und n eine ganze Zahl von 2-1000 ist.

## Revendications

1. Procédé haute pression amélioré de préparation d'une polyoléfine haute pression, la haute pression du procédé étant établie, au moins en partie, à l'aide d'un hyper-compresseur, dans lequel procédé l'amélioration comprend le fait d'utiliser, en qualité de lubrifiant pour l'hyper-compresseur, un polyéther-polyol ne comportant pas plus d'un groupe fonctionnel hydroxyle.

2. Procédé conforme à la revendication 1, dans lequel le lubrifiant comprend un polyéther-polyol qui ne comporte pas plus d'un groupe fonctionnel hydroxyle et qui a pour formule la suivante :
R-[O-C(R₁)₂]ₙ-O-R₂
dans laquelle R représente un atome d'hydrogène ou un groupe hydrocarbyle ou hydrocarbyle à substituant(s) inerte(s), en C₁₋₂₀, R₁ représente indépendamment un atome d'hydrogène ou un groupe hydrocarbyle ou hydrocarbyle à substituant(s) inerte(s), en C₁₋₂₀, R₂ représente un groupe constituant une coiffe terminale, et l'indice n est un nombre entier qui vaut de 2 à 1000.

3. Procédé conforme à la revendication 2, dans lequel le groupe constituant une coiffe terminale est un groupe alkyle ou un groupe alkyle à substituant(s) inerte(s).

4. Procédé conforme à la revendication 3, dans lequel R représente un groupe hydrocarbyle ou hydrocarbyle à substituant(s) inerte(s), en C₁₋₂₀.

5. Procédé conforme à la revendication 3, dans lequel R représente un atome d'hydrogène.

6. Hyper-compresseur contenant, en qualité de lubrifiant, un polyéther-polyol ne comportant pas plus d'un groupe fonctionnel hydroxyle.

7. Hyper-compresseur conforme à la revendication 6, dans lequel le lubrifiant comprend un polyéther-polyol qui ne comporte pas plus d'un groupe fonctionnel hydroxyle et qui a pour formule la suivante :
R-[O-C(R₁)₂]ₙ-O-R₂
dans laquelle R représente un atome d'hydrogène ou un groupe hydrocarbyle ou hydrocarbyle à substituant(s) inerte(s), en C₁₋₂₀, R₁ représente indépendamment un atome d'hydrogène ou un groupe hydrocarbyle ou hydrocarbyle à substituant(s) inerte(s), en C₁₋₂₀, R₂ représente un groupe constituant une coiffe terminale, et l'indice n est un nombre entier qui vaut de 2 à 1000.
